# EUROPEAN PATENT SPECIFICATION

(11) **EP 1 509 112 B1**
(45) Date of publication and mention of the grant of the patent: **12.07.2006**
(21) Application number: 03727722.5
(22) Date of filing: 30.05.2003
(51) Int. Cl.: A47J 31/24, A47J 31/38

(54) **APPARATUS FOR MAKING ESPRESSO COFFEE**
ESPRESSO-KAFFEEMASCHINE
CAFETIERE A CAFE EXPRESSO

(30) Priority: 31.05.2002 GB 0212710
(43) Date of publication of application: 02.03.2005
(73) Proprietor: PRESSO LIMITED, London NW1 6DD (GB)
(72) Inventor: HUNT, Patrick, Campbell, London SW15 4JY (GB); RIDDIFORD, Martin, Philip, London SE21 7DF (GB)
(74) Representative: Gallafent, Richard John
(86) International application number: PCT/GB2003/002400
(87) International publication number: WO 2003/101264

(56) References cited:
- CH-A- 298 831
- FR-A- 1 285 634
- GB-A- 728 476
- GB-A- 833 927

## Description

This invention relates to apparatus for making espresso coffee.

Coffee is globally one of the world's most widely consumed beverages. It is normally drunk hot and it is made by extracting soluble components using hot water from so-called ground coffee, i.e. a granular powder formed by grinding roasted coffee beans. It is well-known that the taste of the coffee varies substantially, even with identical ground coffee as the starting material, depending upon the precise conditions under which the extraction is carried out. One known widely used method is to pass a relatively small quantity of hot water through a compacted block of coffee grounds under relatively high pressure in order to force the water through the block. This results in a quantity of so-called espresso coffee which is the type of coffee beverage preferred by many users.

In order to produce espresso coffee, e.g. in a café or restaurant, it is common to use for this purpose a counter-top size so-called "espresso machine". These machines are generally provided with a plumbed-in water supply and include means for maintaining a reservoir of water at a relatively high temperature as well as complex systems for expelling a measured quantity of that hot water via a block of compressed ground coffee. That block is held tightly against a pressurised water outlet of the machine by means of a cylindrical metal pot in which the block is compressed. The block may be of loose coffee granules put into the pot (conventionally it is filled to the brim, the granules then being compressed to a smaller volume when the pot is affixed to the machine), or may be in the form of a sachet or 'pod' made of water-permeable material and sized to fit snugly into the pot. The pot is provided with means to hold it sealed tightly against the pressurised water outlet. Conventionally this is achieved by projections on the exterior of the pot engaging short thread portions on the interior of a skirt surrounding the outlet. The pot is usually provided with a laterally extending exterior handle enabling the pot to be screwed tightly into position by turning through around 90°. The base of the pot contains an aperture through which the coffee may pass to drop into a cup placed below the pot during dispensing, which may be bifurcated to divide the outflow into two streams each of which then drops into a cup placed below the pot.

Apparatus of this sort provided for café and restaurant use is of substantial size and usually requires plumbing into a water system and is accordingly not ideally suited for domestic use. An example of such apparatus is described in US-A-4,421,014. Scaled down such apparatus for domestic use has been manufactured for many years, but such apparatus has conventionally required an electrical supply and has incorporated suitable means for generating hot water under pressure and expelling a quantity of it through the pot containing the compressed block of coffee grounds. Other attempts to make an apparatus suitable for domestic use are shown in US-A-4,763,566 and GB-A-801,609. A simpler design is described in FR-A-728,361 where a cylinder containing a piston, actuated by a pair of levers, is used to force water through a grille upon which coffee grounds are located. Document CH-298831 discloses the preamble of claim 1.

We have now found that, by careful design, it is possible to produce excellent espresso coffee using apparatus that is simple in operation, requires no electricity supply or permanent plumbing, and which can be produced in quantity relatively inexpensively, thus further extending the market for domestic espresso coffee-making apparatus.

According to the present invention, there is provided apparatus for making espresso coffee comprising a support frame, a vertically mounted open-topped cylinder mounted on the support frame, the frame and cylinder defining a space below the cylinder adapted to recieve a block of compressed ground coffee and below which a cup to receive the coffee may be inserted, means for locating adjacent the base of the cylinder a quantity of ground coffee, a piston adapted to fit in the cylinder, and an actuation means linked to the piston enabling the piston to be moved up and down in the cylinder by the actuation means, wherein associated with the piston is a one-way value mechanism for enabling water to pass from about to below the head of the piston as the piston is raised within the cylinder by the actuation means.

A variety of actuation means can be envisaged, for example, mutually engaging throughthreads on a piston shaft and on a bore located at the top of the cylinder through which the shaft extends. Alternatively, pneumatic pressure such as with an inflation bag could be used to actuate the piston.

The preferred actuation means are a pair of levers pivoted to the frame and pivotally linked to the piston. Such levers may be geared together to promote even pivotal movement thereof.

Preferably the levers are mounted 180° apart relative to the axis of the cylinder and movable from an elevated position in which the piston is located at or near the top of the cylinder to a lowered position in which the piston abuts the base of the cylinder.

The most convenient way of locating the compressed granules adjacent the base of the cylinder is to use a standard pot, e.g. bayonet fitted to the support frame, though the apparatus may be configured with a suitable sachet or 'pod' receptacle instead, e.g. hingeable down to enable insertion of a fresh sachet/pod and swivellable up and clippable in position to hold the sachet/pod compressed against the underside of the cylinder.

To use the preferred form of such apparatus, the user first places a quantity of ground coffee in a pot which may be one of the standard conventional designs with one or more outlets to direct coffee into one or more cups. The pot is then fitted underneath the cylinder in conventional fashion and the desired number of cups are placed beneath it. The cylinder is then filled with hot water and the hot water then expressed from the cylinder by means of the piston actuated by moving the two levers. The movement of the levers is under the control of the user and can be controlled accordingly to expel the hot water from the cylinder through the block of compressed ground coffee relatively slowly at a relatively low pressure, or relatively fast at a considerably higher pressure. The taste of the resulting coffee differs and accordingly the user can operate the apparatus to suit his or her taste.

In operation, as noted above, the cylinder is first filled to the desired extent with hot water above the piston. The piston is then raised and the water passes the piston head to collect in the lower region of the cylinder, e.g. via a one-way valve mechanism mounted in the piston. Such a valve should be easy to operate, easy to clean, and capablé of withstanding the substantial back pressure exerted as the hot water in the cylinder is expelled under pressure through the compressed block of ground coffee.

In a particularly preferred embodiment, this valve mechanism is provided by constructing the piston with an axially movable seal ring located between the exterior periphery of the piston and the internal cylindrical wall of the cylinder, the seal ring being held captive between a pair of axially spaced flanges on the piston, the axial spacing between the flanges exceeding the axial dimension of the seal ring, and the arrangement being such that when the sea! ring is adjacent the lower flange of the piston, flow channels formed in the piston are open and wherein those flow channels are closed when the seal ring is adjacent the upper flange.

It is found that this is a particularly simple and effective way of providing a valve in the piston, particularly when the seal ring is a resilient o-ring compressed between the exterior of the piston and the interior wall of the cylinder. As the piston is raised within the cylinder, the o-ring rolls to lie adjacent the lower flange opening the flow channels and enabling water above the cylinder to flow through them into the increasing volume between the end of the cylinder and the rising piston. When the piston is moved downwards, the ring rolls to lie adjacent the upper flange and to seal the exterior periphery of the piston tightly against the internal cylindrical wall of the cylinder, thus allowing the application of pressure to the water in the cylinder to express it through the compressed block of ground coffee.

Preferably the linkage between the piston and the levers or other actuation mechanism is easily and quickly dismountable so that the piston may be removed entirely from the cylinder to enable it to be cleaned. The cylinder may also be easily dismounted from the support frame, for like purposes.

Other features and advantages of the invention will become clear from the explanation of a particular preferred embodiment of apparatus according to the invention which is shown by way of example in the accompanying drawings. In those drawings:
Figure 1 is a perspective view of apparatus for making espresso coffee in accordance with the present invention,
Figure 2 is an exploded view of the apparatus of Figure 1 showing the various components thereof,
Figure 3 is a perspective view of the piston of the apparatus of Figure 1 inverted, and
Figure 4 is a longitudinal section through the centre of the piston.

Referring to the drawings, the apparatus consists generally of a base plate 1 on which is mounted a main body portion 2 in the form of generally arched shape having two downward legs attached to either end of the generally oval base plate 1 and having at its upper end a cylindrical collar 4 into which is fitted an upwardly open cylinder 3. Mounted to the collar 4 are two actuation levers 6, 7, each of which consists as shown in the drawing of an arm which bifurcates into two shorter arms, each shorter arm having an aperture 8 near its free end. The free ends of the shorter arms of levers 6, 7 are relieved to receive one of four apertured plates 11, 13 each of which has an arcuate toothed edge. Each plate 11, 13 is held adjacent the facing ends of the shorter arms by a collet 31, which collets can be assembled to the arms and plates straightforwardly, whereafter the ends of the levers 8 carrying plates 11, 13 and collets 31, can be slipped over four cylindrical posts 10 on the collar 4, bringing apertures 8 into line with apertures in each post 10. The toothed plates 11, 13 and the levers 6, 7 are held captive and pivoted on to collar 4 by means of four fixing screws 12 which pass through apertures 8 and into posts 10, with each plate 13 then meshing with a plate 11, so linking the pivotal movement of levers 6 and 7 together.

Adjacent the bifurcation in each of levers 6 and 7 is a slot 15 which is adapted to receive one end of a linkage arm 16. Each of the two identically shaped arms 16 is held pivoted in slot 15 by virtue of a pin (not shown in the drawings) which passes through a transverse bore 18 in each of levers 6 and 7 and a hole 19 at the lower end of each arm 16, and two spacer washers 32 either side of hole 19.

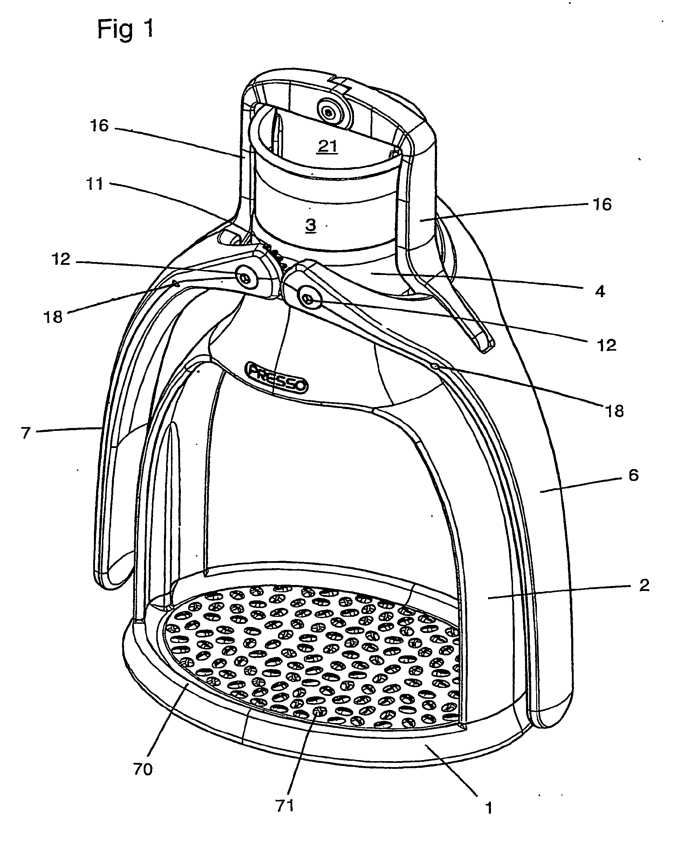

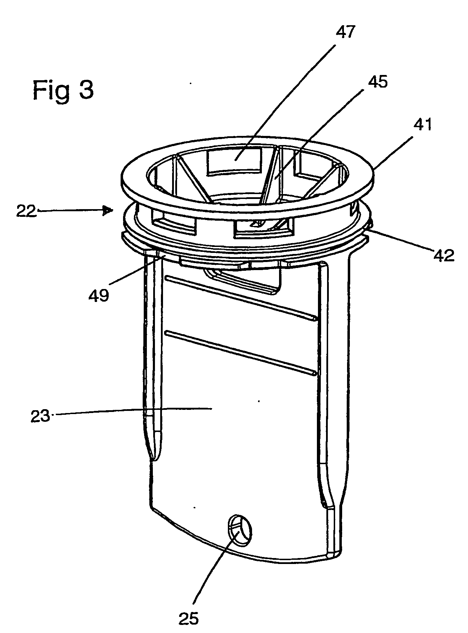

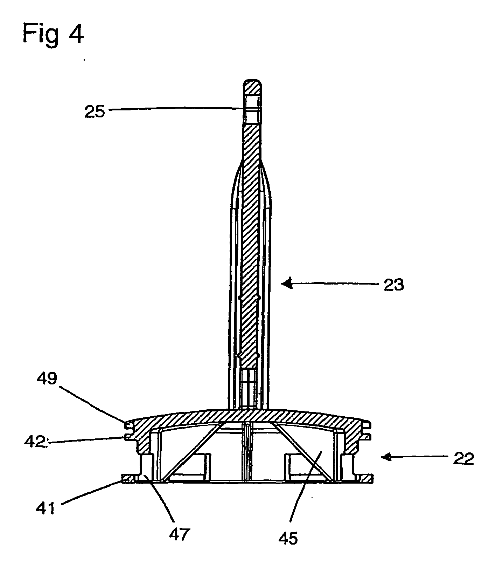

The upper ends of arms 16 are cut away to one side, the remainder being pivotally connected with the upper end of a plunger assembly generally denoted 21 in Figure 1. The plunger assembly is shown in more detail in Figures 3 and 4 and consists of a moulded piston consisting of a head 22 and an upwardly extending plate 23 moulded integrally therewith. The upper end of plate 23 has a bore 25 through which a threaded stud 26 and collar 28 may pass, in order to form the pivotal connection with the upper ends of arms 16, one side of each arm lying against each side of plate 23.

When the apparatus is assembled as shown in Figure 1, it can be appreciated that, when the levers 6 and 7 are raised, raising in an even fashion being achieved by the meshing of toothed plates 11, 13, assembly 21 is raised so that the piston head 22 lies adjacent to the top of cylinder 3. By moving levers 6 and 7 downwards, towards the position where they lie against the legs of main body portion 2, the plunger assembly 21 is moved downwards in the cylinder 3.

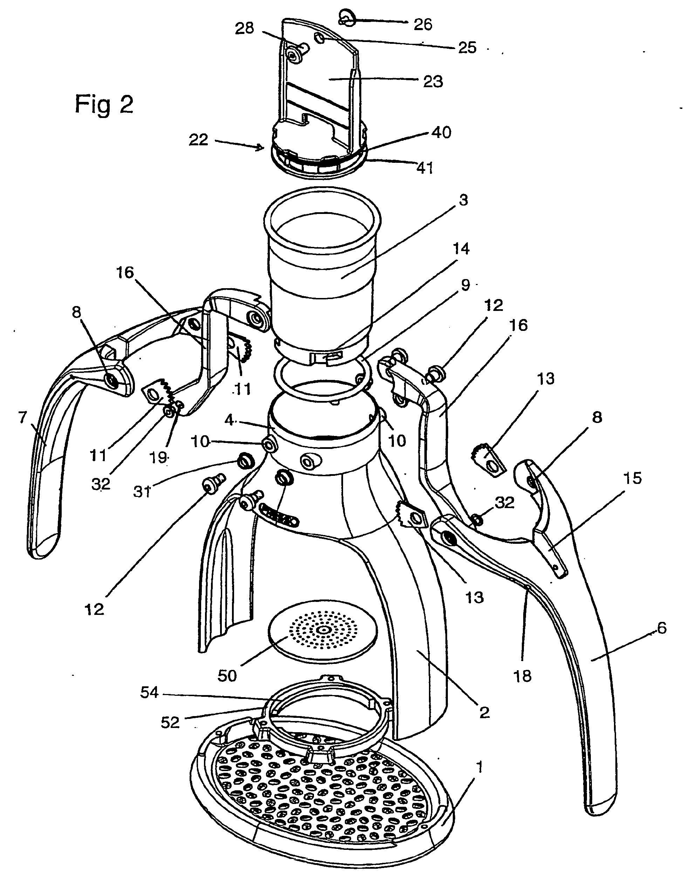

Piston head 22 is sized so as to enable it to be easily moved up and down in cylinder 3, by moving the levers 6 and 7. In order to seal the outside of the piston head 22 to the interior wall of the cylinder 3, the piston head 22 bears an external o-ring which is shown in the drawings only in Figure 2. The o-ring, denoted 40, may adopt a position adjacent a lower flange 41 moulded on the exterior periphery of the piston head 22, or a position in which it lies against an upper flange 42, likewise integrally moulded. When the piston is being pulled up inside the cylinder 3, o-ring 40 moves to lie adjacent lower flange 41. When the piston is moved down inside cylinder 3, the o-ring 40 rolls to lie against upper flange 42.

As shown most clearly in Figure 3, the lower portion of the piston head 22 (shown uppermost in Figure 3 where assembly 21 is shown inverted) is in the form of a hollow skirt with internal radial reinforcing ribs 45. Around the periphery of the skirt are six apertures 47 which extend from adjacent lower flange 41 to approximately half-way up the space between flanges 41 and 42.

When the o-ring 40 is adjacent lower flange 41, there are spaces accordingly enabling water to pass between the side of the piston and the wall of cylinder 3 through apertures 47 and into the space below piston head 22. When the piston is lowered, however, o-ring 40 moves to lie against upper flange 42, thus constituting a complete seal around the entire periphery of the piston head 22, so enabling water to be expressed under pressure from cylinder 3. In order to assist the flow of water downwardly past the piston head 22 as it is raised within cylinder 3, the upper edge of the piston head 22 is relieved by a set of notches 49.

As shown in the exploded diagram in Figure 2, the base of cylinder 3 has locking formations 14 thereon which are adapted to engage in a bayonet-fitting fashion with a number of projections located intemally of collar 4 so that cylinder 3 may be held fast against axial movement in collar 4, but, for example may be easily removed for cleaning.

In order to maintain a good seal, an o-ring 9 is located between the base of cylinder 3 and the upper face of a rubber perforated diaphragm 50. The diaphragm 50 is held in place by a locking ring 52 held in place by bolts passing through four lugs and screwed upwardly into sockets in collar 4. Ring 52 which has two cutouts at the ends of two internal spiral ramp sections 54, constituting, with the conventional projections on the side of a standard pot, a bayonet-type connection. The rubber perforated diaphragm 50 acts as a seal between the base of cylinder 3 and the upper edge of a conventional handled pot for containing a portion of ground coffee. The pot may be swivelled to rotate the pot about its axis in a first direction such that the standard projections on the exterior of the pot engage the spiral ramp sections 53. This brings the upper edge of the pot into contact with the lower face of diaphragm 50 and accordingly seals the cylinder 3 against the pot. The pot may easily be removed by rotating it about its axis, in the opposite direction, until the projections disengage with the ramp sections 54 so freeing the pot and enabling used coffee grounds to be discarded. In addition, the diaphragm 50 also serves to prevent coffee grounds being sucked from the pot into the bottom of the cylinder 3 by the back pressure exerted as the apparatus is used.

Finally, base 1 has an external rim 70 to contain any spillage and on its floor a series of raised coffee bean shaped formations 71 which serve to hold a cup placed on base 1 out of contact with the upper side of base 1 and accordingly unlikely to pick up any liquid which may have dropped on to the base during use of the apparatus.

### Use of the apparatus is straightforward:

First of all, a pot is filled with ground coffee either loose or in a sachet or 'pod' and fitted into place in conventional fashion by lifting and twisting. At this stage, the levers 6 and 7 are in their downward position, as shown in Figure 1, and the piston head 22 is adjacent the base of cylinder 3. Hot water is now poured into the top of cylinder 3, for example from a conventional electric kettle. The cylinder is then filled to the desired degree. It need not be filled fully if the user desires a smaller cup of coffee than the capacity of cylinder 3 and the side of the piston may bear markings if desired to assist in acurate filling, e.g. a line corresponding to a quantity of water equivalent to a standard 'single' espresso, and a second, higher line for a 'double espresso' quantity. The levers 6 and 7 are then moved upwards. Via arms 16, this raises the plunger assembly 21 and because, as the movement starts, o-ring 40 moves to the position adjacent the lower flange 41, the water now flows from above the piston head 22 to below it. This is achieved simply and effectively and the apparatus is then in a position with the levers 6, 7 elevated and with the piston head 22 located at or near the top of the cylinder 3. From that position, levers 6 and 7 are pressed downwards and, at the start of that motion, communicated via arms 16 to the plunger assembly 21, o-ring 40 shifts to the position adjacent upper flange 42, thus sealing the piston head 22 against the interior wall of cylinder 3 and now enabling the water to be expelled under pressure from cylinder 3 by continued downward pressure on levers 6 and 7. Provided that the coffee grounds are tightly packed and the seal using diaphragm 50 is well-made, quite substantial pressure is required on the arms which translates into a substantial water pressure above the compacted grounds. The meshing of toothed plates 11, 13 provides gearing on the levers 6 and 7 so evening up the forces applied to the arms to provide the substantial water pressure. The freshly-made coffee emerges from the compacted grounds in the pot and emerges undemeath the pot to drop into a waiting cup.

To make another cup, the handled pot is swivelled to release it, the used grounds removed, fresh grounds inserted and the process repeated. It is quick, simple, elegant and makes an excellent cup of espresso coffee.

## Claims

1. An apparatus for making espresso coffee comprising a support frame (2), a vertically mounted open-topped cylinder (3) mounted on the support frame, the frame and cylinder defining a space below the cylinder adapted to recieve a block of compressed ground coffee and below which a cup to receive the coffee may be inserted, means for locating adjacent the base of the cylinder a quantity of ground coffee, a piston adapted to fit in the cylinder, and an actuation means linked to the piston enabling the piston to be moved up and down in the cylinder by the actuation means, **characterized in that** associated with the piston is a one-way valve mechanism for enabling water to pass from above to below the head (22) of the piston as the piston is raised within the cylinder by the actuation means.

2. An apparatus for making espresso coffee according to Claim 1 wherein the actuation means are a pair of levers (6, 7) pivoted to the frame and pivotally linked to the piston.

3. An apparatus for making espresso coffee according to Claim 2 wherein the levers (6, 7) are mounted 180° apart relative to the axis of the cylinder (3) and movable from an elevated position in which the piston is located at or near the top of the cylinder to a lowered position in which the piston abuts the base of the cylinder.

4. An apparatus for making espresso coffee according to Claim 2 or 3 wherein the linkage (16) between the piston and the levers (6, 7) is easily and quickly dismountable so that the piston may be removed entirely from the cylinder (3) to enable it to be cleaned.

5. An apparatus for making espresso coffee according to any of Claims 2 to 4 wherein the levers (6, 7) are geared together to promote even pivotal movement thereof.

6. An apparatus for making espresso coffee according to any one of Claims 1 to 5 wherein the one-way valve mechanism for enabling water to pass the head (22) of the piston is an axially movable seal ring (40) located between the exterior periphery of the piston and the internal cylindrical wall of the cylinder (3), the seal ring being held captive between a pair of axially spaced flanges (41, 42) on the piston, the axial spacing between the flanges exceeding the axial dimension of the seal ring, and the arrangement being such that when the seal ring is adjacent the lower flange (41) on the piston, flow channels (47) formed therein are open and wherein those flow channels are closed when the seal ring is adjacent the upper flange (42).

7. An apparatus for making espresso coffee according to Claim 6 wherein the seal ring (40) is a resilient o-ring compressed between the exterior of the piston head (22) and the interior wall of the cylinder.

8. An apparatus for making espresso coffee according to any of Claims 1 to 7 wherein the cylinder (3) is mounted in the support frame (2) by way of a bayonet-type fitting (14).

9. An apparatus for making espresso coffee according to any of Claims 1 to 8 wherein the support frame (2) is provided with a base (1) containing raised formations (71) on its upper surface such that a cup placed on the base rests on the raised formations and out of contact with the upper surface of the base.

10. An apparatus for making espresso coffee according Claim 9 wherein the base (1) is provided with an external rim to contain spillage.

11. An apparatus for making espresso coffee according to any of Claims 1 to 10 wherein the means for locating a quantity of ground coffee at the base of the cylinder comprises a standard pot adapted to contain a quantity of couffee grounds, and, on the pot and at the base of the cylinder, interengagable means enabling the pot to be held against the base of the cylinder with the grounds compressed therein.

## Patentansprüche

1. Vorrichtung zum Zubereiten von Espressokaffee, mit einem Trägerrahmen (2), einem vertikal auf dem Trägerrahmen montierten, oben offenen Zylinder (3), wobei der Rahmen und der Zylinder unterhalb des Zylinders einen Raum bilden, der zur Aufnahme eines Blocks aus komprimiertem gemahlenen Kaffee ausgebildet ist und unter den eine Tasse zur Aufnahme des Kaffees hineingestellt werden kann, einer Einrichtung zum Anordnen einer Menge von gemahlenem Kaffee nahe dem Boden des Zylinders, einem Kolben, der in den Zylinder eingepaßt ist, und einer mit dem Kolben verbundenen Betätigungseinrichtung, die ein Auf- und Abwegen des Kolbens in dem Zylinder mittels der Betätigungseinrichtung ermöglicht, **dadurch gekennzeichnet, daß** dem Kolben ein Einwegventilmechanismus zugeordnet ist, um zu ermöglichen, daß Wasser von oben nach unterhalb des Kopfes (22) des Kolbens hindurchtreten kann, wenn der Kolben innerhalb des Zylinders mittels der Betätigungseinrichtung angehoben wird.

2. Vorrichtung zum Zubereiten von Espressokaffee gemäß Anspruch 1, worin die Betätigungseinrichtung aus einem Paar Hebel (6, 7) besteht, die an dem Rahmen drehgelenkig angeordnet und mit dem Kolben drehgelenkig verbunden sind.

3. Vorrichtung zum Zubereiten von Espressokaffee nach Anspruch 2, worin die Hebel (6, 7) bezüglich der Achse des Zylinders (3) im Abstand von 180° befestigt sind und von einer hochgestellten Position, in welcher der Kolben an der Oberseite des Zylinders oder in deren Nähe angeordnet ist, in eine tieferliegende Position, in welcher der Kolben an dem Boden des Zylinders anliegt, bewegbar ist.

4. Vorrichtung zum Zubereiten von Espressokaffee nach Anspruch 2 oder 3, worin die Verbindung (16,) zwischen dem Kolben und den Hebeln (6, 7) leicht und rasch demontierbar ist, so daß der Kolben von dem Zylinder 3 vollständig entfernt werden kann, um seine Reinigung zu ermöglichen.

5. Vorrichtung zum Zubereiten von Espressokaffee nach einem der Ansprüche 2 bis 4, worin die Hebel (6, 7) durch ein Getriebe verbunden sind, um eine gleichmäßige Schwenkbewegung zu unterstützen.

6. Vorrichtung zum Zubereiten von Espressokaffee nach einem der Ansprüche 1 bis 5, wobei der Einwegventilmechanismus für das Ermöglichen des Hindurchtretens von Wasser durch den Kopf (22) des Kolbens ein axial beweglicher Dichtungsring (40) ist, der zwischen dem Außenumfang des Kolbens und der Innenwand des Zylinders (3) angeordnet ist, wobei der Dichtungsring innerhalb eines Paars axial beabstandeter Flansche (41, 42) des Kolbens unverlierbar gehalten wird und der Axialabstand zwischen den Flanschen die Axialabmessung des Dichtungsrings übersteigt sowie die Anordnung derart ausgebildet ist, daß dann, wenn sich der Dichtungsring nahe dem unteren Flansch (41) an dem Kolben befindet, darin vorhandene Strömungskanäle (47) offen sind und diese Strömungskanäle geschlossen sind, wenn sich der Dichtungsring nahe dem oberen Flansch (42) befindet.

7. Vorrichtung zum Zubereiten von Espreasokaffee nach Anspruch 6, worin der Dichtungsring (40) ein elastischer O-Ring ist, der zwischen dem Äußeren des Kolbenkopfes (22) und der Zylinderinnenwand komprimiert ist.

8. Vorrichtung zum Zubereiten von Espressokaffee nach einem der Ansprüche 1 bis 7, worin der Zylinder (3) mittels eines Bayonettverschlusses (14) an dem Trägerrahmen (2) befestigt ist.

9. Vorrichtung zum Zubereiten von Espressokaffee nach einem der Ansprüche 1 bis 8, worin der Trägerrahmen (2) einen Boden (1) aufweist, der an seiner oberen Oberfläche derartige erhabene Ausbildungen (71) aufweist, daß eine auf den Boden gestellte Tasse auf den erhabenen Ausbildungen ruht und mit der oberen Oberfläche des Bodens keinen Kontakt hat.

10. Vorrichtung zum Zubereiten von Espressokaffee nach Anspruch 9, worin der Boden (1) einen Außenrand zur Aufnahme eines Überlaufs aufweist.

11. Vorrichtung zum Zubereiten von Espressokaffee nach einem der Ansprüche 1 bis 10, worin die Einrichtung zum Anordnen einer Menge von gemahlenem Kaffee am Boden des Zylinders einen Standardbehälter aufweist, der zur Aufnahme einer Menge von Kaffeemahlgut ausgebildet ist, sowie an dem Behälter und an dem Boden des Zylinders miteinander in Eingriff bringbare Mittel vorgesehen sind, die es ermöglichen, daß der Behälter gegen den Boden des Zylinders mit dem komprimierten Mahlgut darin gehalten wird.

## Revendications

1. Appareil destiné à faire du café express, comprenant un cadre de support (2), un cylindre à dessus ouvert monté verticalement (3) et monté sur le cadre de support, le cadre et le cylindre définissant un espace, en dessous du cylindre, adapté pour recevoir un bloc de café moulu comprimé, et on dessous duquel une tasse peut être introduite pour recevoir le café, des moyens destinés à positionner de manière adjacente à la base du cylindre, une quantité de café moulu, un piston adapté pour s'ajuster dans le cylindre, et des moyens d'actionnement reliés au piston, permettant de déplace le piston de haut en bas dans le cylindre grâce aux moyens d'actionnement, **caractérisé en ce qu'**un mécanisme de soupape de non-retour est associé au piston pour permettre à l'eau de passer du dessus de la tête (22) du piston en dessous de celle ci pendant que le piston est relevé à l'intérieur du cylindre par les moyens d'actionnement.

2. Appareil destiné à faire du café express selon la revendication 1, dans lequel les moyens d'actionnement sont une paire de leviers (6, 7) montés pivotants sur le cadre et reliés au piston de manière pivotante.

3. Appareil destiné à faire du café express selon la revendication 2, dans lequel les leviers (6, 7) sont montés de manière à former un angle de 180 degrés par rapport à l'axe du cylindre (3) et ils peuvent se déplacer à partir d'une position haute, dans laquelle le piston se situe en haut ou à proximité du haut du cylindre, vers une position basse, dans laquelle le piston bute contre la base du cylindre.

4. Appareil destiné à faire du café express selon la revendication 2 ou 3, dans lequel le raccord (16,) entre le piston et les leviers (6, 7) est aisément et rapidement démontable de manière à ce que le piston puisse être entièrement retiré du cylindre (3) afin de permettre son nettoyage.

5. Appareil destiné à faire du café express selon l'une quelconque des revendications 2 à 4, dans lequel les leviers (6, 7) sont mutuellement engrenés pour favoriser un mouvement égal de pivotement de ceux-ci.

6. Appareil destiné à faire du café express selon l'une quelconque des revendications 1 à 5, dans lequel le mécanisme de soupape de non-retour destiné à permettre à l'eau de dépasser la tête (22) du piston, est une bague d'étanchéité (40) située entre la périphérie extérieure du piston et la paroi cylindrique interne du cylindre (3), la bague d'étanchéité étant retenue captive entre une paire de brides espacées dans un sens axial (41, 42) sur le piston, l'espacement axial entre les brides dépassant la dimension axiale de la bague d'étanchéité, et l'agencement étant tel que, lorsque la bague d'étanchéité est adjacente à la bride inférieure (41) sur le piston, des canaux d'écoulement (47) formés dans celui-ci sont ouverts, et dans lequel ces canaux d'écoulement sont fermés lorsque la bague d'étanchéité est adjacente à la bride supérieure (42).

7. Appareil destiné à faire du café express selon la revendication 6, dans lequel la bague d'étanchéité (40) est un joint torique élastique comprimé entre l'extérieur de la tête de piston (22) et la paroi interne du cylindre.

8. Appareil destiné à faire du café express selon l'une quelconque des revendications 1 à 7, dans lequel le cylindre (3) est monté dans le cadre de support (2) au moyen d'un raccord à baïonnette (14).

9. Appareil destiné à faire du café express selon l'une quelconque des revendications 1 à 8, dans lequel le cadre de support (2) est muni d'une base (1) contenant des formations en relief (71) sur sa surface supérieure, de sorte qu'une tasse posée sur la base repose sur les formations en relief et soit hors de contact avec la surface supérieure de la base.

10. Appareil destiné à faire du café express selon la revendication 9, dans lequel la base (1) est munie d'un rebord extérieur pour retenir le liquide renversé.

11. Appareil destiné à faire du café express selon l'une quelconque des revendications 1 à 10, dans lequel les moyens destinés à placer une certaine quantité de café moulu au niveau de la base du cylindre comprennent un récipient standard agencé pour contenir une certaine quantité de marc de café et, sur le récipient à la base du cylindre, des moyens interchangeables destinés à permettre au récipient d'être retenu contre la base du cylindre avec le marc de café comprimé dans celui-ci.
